# EUROPEAN PATENT SPECIFICATION

(11) **EP 0 353 523 B1**
(45) Date of publication and mention of the grant of the patent: **09.06.1993**
(21) Application number: 89112928.0
(22) Date of filing: 14.07.1989
(51) Int. Cl.: C04B 35/00, B22F 3/22

(54) **Composition for extrusion molding of green body for sintering**
Zusammensetzung zum Strangpressen eines zu sinternden Grünkörpers
Composition pour mouler par extrusion un corps vert à fritter

(30) Priority: 05.08.1988 JP 195741/88
(43) Date of publication of application: 07.02.1990
(73) Proprietor: Shin-Etsu Chemical Co., Ltd., Chiyoda-ku Tokyo 100 (JP)
(72) Inventor: Chiba, Tohru, Joetsu-shi Niigata-ken (JP); Nakamura, Shin-ichiro, Joetsu-shi Niigata-ken (JP); Hayakawa, Kazuhisa, Joetsu-shi Niigata-ken (JP)
(74) Representative: Fuchs Mehler Weiss

(56) References cited:
- FR-A- 2 488 880
- GB-A- 2 022 071
- US-A- 4 098 752
- US-A- 4 649 003
- CHEMICAL ABSTRACTS, vol. 100, no. 14, 12th April 1984, page 293, column 2, abstract no. 108185m, Columbus, Ohio, US; & JP-A-58 181 763 (NIPPON OILS & FATS K.K.) 24-10-1983

## Description

### BACKGROUND OF THE INVENTION

The present invention relates to a composition for extrusion molding of a green body for sintering. More particularly, the invention relates to a composition based on an inorganic powder, such as ceramic and metallic powders, blended with a polymeric binder material and a liquid and suitable for extrusion-molding of a green body which is then dried and sintered at high temperatures to give a sintered article.

Various kinds of sintered articles are prepared from various kinds of ceramic and metallic powders and widely employed in modern industries. For example, sintered bodies are prepared from various oxide powders such as alumina, zirconia, PZT, cordierite and the like. It is usual that the sintered bodies are prepared by first preparing a moldable composition of the ceramic powder blended with a polymeric binder and a solvent for the polymer and the composition is extrusion-molded into the desired form of plates, tubes, rods and the like, which is called a green body, followed by drying of the green body and sintering of the dried body at a high temperature. Examples of the current applications of such ceramic-based sintered articles include substrates of integrated circuits in the electronic industry, ceramic capacitors, honeycomb-shaped room-heater elements, honeycomb-shaped deodorant carrier for industrial use, honeycomb-shaped catalytic exhaust cleaner for automobiles and the like of which the essential requirements such as high heat resistance and high thermal conductivity can be satisfied by using a proper ceramic material.

It is a recent trend of development that, in addition to the above named oxide-based sintered ceramic materials, various kinds of non-oxide ceramic materials in a powdery form are shaped by extrusion molding and sintered to give a sintered ceramic article. Such non-oxide ceramic materials of particular interest include silicon nitride, boron nitride, aluminum nitride, silicon carbide and the like which give sintered articles having higher heat resistance, higher mechanical strength, higher abrasion resistance and higher thermal conductivity than conventional oxide-based sintered ceramic articles. Examples of promising applications of such non-oxide sintered ceramic articles include high-performance substrates of integrated circuits, heat-radiator panels, electric insulators, refractory materials, cutting and grinding tools, corrosion-resistant materials and the like.

In the above described process for the preparation of sintered ceramic articles by extrusion molding, the inorganic ceramic powder is first blended with a water-soluble polymeric material as a binder and water as the solvent of the polymer and wetting agent of the powder together with other optional additives to give a moldable composition which is shaped by extrusion molding using a vacuum extrusion molding machine into a so-called green body. The thus prepared green body is dried by evaporating the water and then subjected to a heat treatment at a high temperature to effect sintering of the ceramic particles.

The use of water as the wetting agent in the preparation of a moldable powder composition for molding a green body for sintering involves a serious problem, especially when the powder is a non-oxide ceramic material such as aluminium nitride, silicon nitride, silicon carbide and the like or a metallic material such as molybdenum iron and the like because those non-oxide materials are suceptible to oxidation in the atmospheric air in the course of drying after the extrusion molding to cause substantial alteration in the characteristics of the sintered articles.

In view of the above mentioned problem in the use of water in the preparation of a moldable powder composition, the inventors have previously made some attempts for the use of an organic solvent in combination with a polymeric material, such as hydroxypropyl cellulose and the like, soluble in the organic solvent as the binder. The document GB-A- 2 022 071 discloses extrusion molding of a green body for sintering in the absence of water in the context of a method of producing a large sized body of a ceramic honeycomb structure. Unfired unit blocks are formed of a ceramic composition consisting of a powdered ceramic material, an organic binder material, extrusion aids and a solvent for the binder material. Paraffin wax, microcrystalline cellulose and certain esters known as lubricants are disclosed as useful extrusion aids.

Lubricants for the extrusion molding of a thermoplastic resin with admixture of an inorganic filler are known e.g. from the US-A- 4 098 752. This document contemplates modifying agents selected from sorbitan fatty acid esters and polyoxyethylene sorbitan fatty acid esters.

The use of an organic-soluble polymer as the binder has a problem due to the high stickiness or stringiness of the solution prepared by dissolving the polymer in an organic solvent. When a moldable composition is prepared by blending an inorganic powder with such a highly sticky and stringy solution, namely, the composition is extremely sticky so that, when it is introduced into an extrusion molding machine, the composition readily adheres to the inner walls of the extruder barrel, extrusion screws, plungers and the like not to be smoothly discharged out of the extruder machine and the extrusion molding can no longer be continued or, at least, the velocity and hence the productivity of extrusion molding must be greatly decreased.

Another problem is involved in the use of an organic-soluble polymer as the binder as a consequence of use of an organic solvent having a relatively low boiling point. Thus, even when a molding powder composition is prepared by using a controlled amount of the solvent, the moldability of the composition is subject to changes in the lapse of time due to the evaporation of the solvent in the course of compounding and subsequent steps so that very difficult problems are caused in the control of the molding process as well as in the quality control of the molded green bodies.

### SUMMARY OF THE INVENTION

The present invention accordingly has an object to provide a composition of an inorganic powder for extrusion molding of a green body for sintering without the above described problems and disadvantages encountered in both of the water-based and organic solvent-based molding compositions in the prior art.

Thus, the composition of an inorganic powder for extrusion molding of a green body for sintering provided by the invention comprises, as a blend:
(a) 100 parts by weight of an inorganic powder;
(b) from 1 to 10 parts by weight of a polymeric binder soluble in an organic solvent;
(c) from 1 to 20 parts by weight of a lubricant; and
(d) from 5 to 100 parts by weight of an organic solvent capable of dissolving the polymeric material as the component (b), wherein the composition is characterised in that the lubricant (c) is a sorbitan fatty acid ester or a polyoxyethylene sorbitan fatty acid ester other and in that the organic solvent has a boiling point of 90°C or higher under normal pressure.

### DETAILED DESCRIPTION OF THE PREFERRED EMBODIMENTS

As is described above, the molding composition of a powder according to the invention is charactersied by the use of a specific additive, i.e. the component (c), and the use of an organic solvent having a specified boiling point. By virtue of these unique features, the inventive molding composition is freed from the problems of the changes in the moldability of the composition in the lapse of time due to the evaporation of the solvent, adherence of the composition to the surface of the extruder machine to cause stagnant staying of the composition in the extruder machine and oxidation of the powder which is hitherto unavoidable when a non-oxide powder is compounded with water and a water-soluble polymer.

The inorganic powder as the base constituent of the inventive molding composition is not particularly limitative to a particular type but the invention is applicable to the inorganic powder of any types including oxide-based ceramic materials such as alumina, zirconia, barium titanate, aluminum titatnate zirconate and the like, non-oxide ceramic materials such as aluminum nitride, silicon nitride, silicon carbide and the like and metallic materials such as nickel, molybdenum, super-hard alloys for powder metallurgy and the like. The particle size distribution of the inorganic powder is also not particularly limitative provided that the particles are not too coarse to give a satisfactorily sintered article. It is, however, advantageous that the particles have a diameter not exceeding 10 µm in order to ensure smoothness in the extrusion molding without an abrasive effect on the inner walls of the extruder machine.

The binder as the component (b) compounded with the inorganic powder is an organic polymer which is not particularly limitative provided that it is soluble in an organic solvent. Though dependent on the types of the desired sintered articles, it is preferable that the polymer is free from halogens, e.g., chlorine, and metals, e.g., sodium, since these constituents sometimes have an adverse influences on the process of sintering. Examples of preferable organic polymers include methyl cellulose, hydroxypropyl methyl cellulose, hydroxypropyl cellulose, poly(vinyl butyral), poly(vinyl acetate) and the like.

Methyl cellulose and hydroxypropyl methyl cellulose are each a well known water-soluble polymeric material but all of the commercial products of these cellulose derivatives now available on the market are also soluble in various organic solvents including benzyl alcohol and dioxane having a boiling point of 90 °C or higher so that any of these cellulose derivatives purchased in the market can be used satisfactorily.

The amount of the organic polymer as the binder is in the range from 1 to 10 parts by weight per 100 parts by weight of the inorganic powder although the exact amount thereof depends on the material and density of the inorganic powder as well as other process conditions. When the amount of the polymer is too small, no satisfactory binding force can be obtained so that the green body may be subject to crack formation after drying. When the amount thereof is too large, on the other hand, the molding composition is sometimes too sticky to ensure smooth extrusion molding.

The organic solvent as the component (d) in the inventive composition must be capable of dissolving the above mentioned organic polymer in order that the polymer may serve as a binder of the inorganic powder. It is also essential that the organic solvent has a boiling point of 90 °C or higher in order to minimize the problem due to evaporation of the solvent in the course of processing. Though not particularly limitative, preferable organic solvents depends on the kind of the polymer as the binder. For example, benzyl alcohol (boiling point 205.5 °C) and dioxane (boiling point 101.1 °C) are preferred when the polymer is a methyl cellulose or hydroxypropyl methyl cellulose and higher alcohols such as sec-butyl alcohol and hexyl alcohol can be used when the polymer is a hydroxypropyl cellulose in addition to the above named two solvents. Aromatic hydrocarbon solvents such as toluene are suitable for poly(vinyl butyrals) and cyclic ethers such as dioxane are preferred for poly(vinyl acetates).

The amount of the organic solvent contained in the inventive molding composition is in the range from 5 to 100 parts by weight or, preferably, from 5 to 40 parts by weight per 100 parts by weight of the inorganic powder although the exact amount thereof depends on the material, density and particle size ditribution of the inorganic powder and the organic polymer as the binder as well as other process conditions. When the inorganic powder has a relatively large apparent density and the organic polymer exhibits a relatively low viscosity in a solution, the amount of the organic solvent can be reduced. When the inorganic powder has a relatively small apparent density and the organic polymer exhibits a relatively high viscosity, on the other hand, the amount of the organic solvent should be increased so much.

The most characteristic feature in the inventive composition is that the composition comprises a sorbitan fatty acid ester or a polyoxyethylene sorbitan fatty acid ester ether. The sorbitan fatty acid ester is exemplified by sorbitan monocaprylate, sorbitan monooleate, sorbitan monostearate and the like. The polyoxyethylene sorbitan fatty acid ester ether is a polyoxyethylene adduct of a sorbitan fatty acid ester mentioned above and exemplified by polyoxyethylene sorbitan stearyl ether, polyoxyethylene sorbitan lauryl ether and the like. These sorbitan fatty acid esters and polyoxyethylene sorbitan fatty acid ester ethers can be used either singly or as a combination of two kinds or more according to need.

The amount of the sorbitan fatty acid ester and/or polyoxyethylene sorbitan fatty acid ester ether in the inventive molding composition is in the range from 1 to 20 parts by weight per 100 parts by weight of the inorganic powder. It is also important that the amount thereof is in the range from 25% to 200% by weight of the organic polymer as the binder or component (b). When the amount thereof is too small, no full effect can be obtained in suppressing the stickiness or stringiness of the molding composition so that the problem of stagnant staying of the composition in the extruder machine cannot be solved. When the amount thereof is too large, on the other hand, the binding force of the organic polymer is unduly decreased so that the green body molded of the composition has poor mechanical strengths to cause inconveniences in handling.

To summarize the advantages obtained by the invention, the molding composition of the invention has stable moldability due to the evaporation of the organic solvent in the course of processing and the extrusion molding of the composition can be performed very smoothly due to the absence of the problems caused by the sticking and stagnant staying of the composition to and in the extrusion molding machine. Further, the invention provides a means for extrusion-molding of a non-oxide inorganic powder which is unavoidably susceptible to oxidation when the molding compositon is prepared by use of water and a water-soluble polymer as the binder.

In the following, examples and comparative examples are given to illustrate the inventive molding composition in more detail but not to limit the scope of the invention in any way. In the following description, the term of "parts" always refers to "parts by weight".

### Example 1.

A molding composition of an inorganic powder was prepared by uniformly blending, in a Henschel mixer, 100 parts of a silicon nitride powder having an average particle diameter of about 0.5 µm, 8 parts of a hydroxypropyl cellulose (M-P, a product by Shin-Etsu Chemical Co.), 4 parts of a sorbitan monocaprylate and 8 parts of sec-butyl alcohol having a boiling point of 99.5 °C. The composition was further milled on a three-roller mill and then molded by using a vacuum extrusion molding machine into sheets having a thickness of 0.1 mm or 1 mm and a tube having an outer diameter of 5 mm and an inner diameter of 3 mm. The thus prepared green bodies were respectively dried by heating for 5 hours in an oven kept at 80 °C and then subjected to a heat treatment at 1500 °C for 6 hours in an atmosphere of a 9:1 by volume mixture of argon gas and hydrogen gas to effect sintering so that quite satisfactory sintered bodies of sheets and tubes could be obtained. Analysis of these sintered bodies indicated that the oxygen content therein was identical with that in the starting silicon nitride powder.

### Comparative Example 1.

The formulation of the molding composition was the same as in Example 1 except that the amount of the sorbitan monocaprylate was decreased to 0.9 part. Extrusion molding of the composition using the same extruder machine could not be performed due to the so bad stagnant staying of the composition in the extruder machine.

### Comparative Example 2.

The formulation of the molding composition was the same as in Example 1 except that the amount of the sorbitan monocaprylate was increased to 21 parts. Extrusion molding of the composition using the same extruder machine failed to give green bodies having the dimensions as desired due to partial collapsing of the molded bodies in the course of drying.

### Comparative Example 3.

The formulation of the molding composition was the same as in Example 1 except that the sec-butyl alcohol was replaced with 8 parts of methyl alcohol having a boiling point of 64 °C. The result was that the composition was not extrusion-moldable due to evaporation of methyl alcohol in the course of blending.

### Example 2.

A molding composition of an inorganic powder was prepared by uniformly blending, in a Henschel mixer, 100 parts of an alumina powder having an average particle diameter of about 2 µm (LS-200, a product by Nikkei Kako Co.), 4 parts of talc having an average particle diameter of about 25 µm (Hi-filler, a product by Muramatsu Sangyo Co.), 6 parts of a methyl cellulose (SM 400, a product by Shin-Etsu Chemical Co.), 6 parts of a polyoxyethylene sorbitan monostearyl ether and 8 parts of benzyl alcohol having a boiling point of 205.5 °C. The composition was further milled on a three-roller mill and then molded by using a vacuum extrusion molding machine into a sheet having a thickness of 1 mm. The thus prepared green body was dried by heating for 5 hours in an oven kept at 100 °C and then subjected to a heat treatment at 1700 °C for 6 hours in an electric furnace to effect sintering so that a quite satisfactory sintered sheets and tubes could be obtained, which had a density of 2.5 g/cm³.

### Example 3.

The formulation of the molding composition was the same as in Example 2 except that the methyl cellulose was replaced with the same amount of a hydroxypropyl methyl cellulose (60SH-4000, a product by Shin-Etsu Chemical Co.). The result was as satisfactory as in Example 2.

### Example 4.

A molding composition of an inorganic powder was prepared by uniformly blending, in a similar manner to Example 2, 100 parts of a silicon carbide powder having an average particle diameter of about 2 µm, 3 parts of a boron powder having an average particle diameter of about 2 µm, 8 parts of a poly(vinyl acetate), 8 parts of a sorbitan stearate and 40 parts of dioxane having a boiling point of 101 °C. The composition was extrusion-molded into a green body of sheet having a thickness of 1 mm by using a vacuum extrusion molding machine. Sintering of the thus prepared green body of sheet after drying at 100 °C for 12 hours was conducted in the same manner as in Example 1 to give a quite satisfactory sintered ceramic sheet.

### Example 5.

A molding composition of an inorganic powder was prepared by uniformly blending, in a similar manner to the preceding example, 100 parts of the same alumina powder as used in Example 2, 4 parts of the same talc as used in Example 2, 5 parts of a poly(vinyl butyral), 5 parts of a polyoxyethylene sorbitan lauryl ether and 25 parts of toluene having a boiling point of 110.6 °C. The composition was extrusion-molded into a plate of 2 mm thickness by using a vacuum extrusion molding machine and, after drying at 100 °C for 10 hours, sintered at 1700 °C for 6 hours to give a quite satisfactory sintered ceramic plate which had a density of 2.5 g/cm³.

## Claims

1. A composition of an inorganic powder for extrusion molding of a green body for sintering which comprises, as a blend:
(a) 100 parts by weight of an inorganic powder;
(b) from 1 to 10 parts by weight of a polymeric binder soluble in an organic solvent;
(c) from 1 to 20 parts by weight of a lubricant; and
(d) from 5 to 100 parts by weight of an organic solvent capable of dissolving the polymeric material as the component (b),
wherein the composition is characterised in that the lubricant (c) is a sorbitan fatty acid ester or a polyoxyethylene sorbitan fatty acid ester ether and in that the organic solvent has a boiling point of 90°C or higher under normal pressure.

2. The composition as claimed in claim 1 wherein the polymer as the component (b) is selected from the group consisting of methyl cellulose, hydroxypropyl methyl cellulose, hydroxypropyl cellulose, poly(vinyl butyral) and poly(vinyl acetate).

3. The composition as claimed in claim 1 wherein the organic solvent as the component (d) is selected from the group consisting of aromatic hydrocarbon solvents, higher alcohols and cyclic ethers.

4. The composition as claimed in claim 1 wherein the sorbitan fatty acid ester as the component (c) is selected from the group consisting of sorbitan monocaprylate, sorbitan monolaurate and sorbitan monostearate.

5. The composition as claimed in claim 1 wherein the polyoxyethylene sorbitan fatty acid ester ether as the component (c) is polyoxyethylene sorbitan lauryl ether or polyoxyethylene sorbitan stearyl ether.

6. The composition as claimed in claim 1 wherein the amount of component (c) is in the range from 25 % to 200% by weight based on the amount of the polymer as the component (b).

## Patentansprüche

1. Zusammensetzung eines anorganischen Pulvers zum Strangpressen eines zu sinternden Grünkörpers welche als Blend aufweist:
(a) 100 Gewichtsteile eines anorganischen Pulvers;
(b) 1 bis 10 Gewichtsteile eines polymeren Bindemittels, das in einem organischen Lösungsmittel löslich ist;
(c) 1 bis 20 Gewichtsteile eines Schmiermittels; und
(d) 5 bis 100 Gewichtsteile eines organischen Lösungsmittels, das geeignet ist das Polymermaterial der Komponente (b) zu lösen;
wobei die Zusammensetzung dadurch charakterisiert ist, daß das Schmiermittel (c) ein Sorbitanfettsäureester oder ein Polyoxyethylen-sorbitanfettsäureester-ether ist und daß das organische Lösungsmittel bei Normaldruck einen Siedepunkt von 90°C oder höher aufweist.

2. Zusammensetzung gemäß Anspruch 1, in welcher das Polymer als Komponente (b) ausgewählt ist aus der Gruppe bestehend aus Methylcellulose, Hydroxypropyl-methyl-cellulose, Hydroxypropyl-cellulose, Polyvinylbutyral und Polyvinylacetat.

3. Zusammensetzung gemäß Anspruch 1, in welcher das organische Lösungsmittel als Komponente (d) ausgewählt ist aus der Gruppe bestehend aus aromatischen Kohlenwasserstoffen, höheren Alkoholen und cyclischen Ethern.

4. Zusammensetzung gemäß Anspruch 1, in welcher der Sorbitanfettsäureester als Komponente (c) ausgewählt ist aus der Gruppe bestehend aus Sorbitanmonocaprylat, Sorbitanmonolaurat und Sorbitanmonostearat.

5. Zusammensetzung gemäß Anspruch 1, in welcher der Polyoxyethylen-sorbitanfettsäureester-ether als Komponente (c) Polyoxyethylen-sorbitanlaurylether oder Polyoxyethylen-sorbitanstearylether ist.

6. Zusammensetzung gemäß Anspruch 1, in welcher die Menge der Komponente (c) im Bereich von 25 Gew.-% bis 200 Gew.-% liegt, bezogen auf die Menge des Polymers der Komponente (b).

## Revendications

1. Composition d'une poudre inorganique prévue pour l'extrusion d'un corps à vert devant être fritté , selon la présente invention, qui comprend, sous forme de mélange:
(a) 100 parties par poids d'une poudre inorganique
(b) de 1 à 10 parties par poids d'un liant polymère soluble dans un solvant organique;
(c) de 1 à 20 parties par poids d'un lubrifiant; et
(d) de 5 à 100 parties par poids d'un solvant organique capable de dissoudre la matière polymère représentant l'élément (b),
caractérisée en ce que le lubrifiant (c) est un ester d'acide gras de sorbitan ou un éther d'ester d'acide gras de polyoxyéthylène sorbitan et en ce que le solvant organique présente un point d'ébullition de 90° ou plus sous une pression normale.

2. Composition selon la revendication 1, caractérisée en ce que le polymère représenté par l'élément (b) est choisi dans le groupe se composant de méthylcellulose, d'hydroxypropylméthylcellulose, d'hydroxypropylcellulose, de poly(butyrale de vinyle) et de poly(acétate de vinyle).

3. Composition selon la revendication 1, caractérisée en ce que le solvant organique représenté par l'élément (d) est choisi dans le groupe se composant de solvants hydrocarburés aromatiques, d'alcools supérieurs et d'éthers cycliques.

4. Composition selon la revendication 1, caractérisée en ce que l'ester d'acide gras de sorbitan représenté par l'élément (c) est choisi dans le groupe comprenant du sorbitan monocaprylate, du sorbitan monolaurate et du sorbitan monostéarate .

5. Composition selon la revendication 1, caractérisée en ce que l'éther d'ester d'acide gras de polyoxyéthylène sorbitan représenté par l'élément (c) est de l'éther laurylique de polyoxyéthylène sorbitan ou de l'éther stéarylique de polyoxyéthylène sorbitan.

6. Composition selon la revendication 1, caractérisée en ce que la quantité de l'élément (c) se situe entre 25 et 200% par poids en fonction de la quantité de polymère représenté par l'élément (b).
